# EUROPÄISCHE PATENTANMELDUNG

(11) **EP 3 809 025 A1**
(43) Veröffentlichungstag der Anmeldung: **21.04.2021**
(21) Anmeldenummer: 20195712.3
(22) Anmeldetag: 11.09.2020
(51) Int. Cl.: F16K 11/00

(54) **VENTIL ZUM STRÖMUNGSTECHNISCHEN VERBINDEN VON ZWEI PNEUMATISCHEN PUMPEN**

(30) Priorität: 16.10.2019 DE 102019127955
(71) Anmelder: J. Schmalz GmbH, 72293 Glatten (DE)
(72) Erfinder: Straub, David, 72108 Rottenburg (DE); Schittenhelm, Florian, 72270 Baiersbronn (DE)
(74) Vertreter: DREISS Patentanwälte PartG mbB

(57) **Zusammenfassung**

Die vorliegende Erfindung betrifft einVentil (2) zum strömungstechnischen Verbinden von zwei pneumatischen Pumpen (4), die jeweils einen Ansauganschluss (6) und einen Förderanschluss 88) aufweisen, mit einem ersten Anschluss (10) eines unterdruckbetätigbaren oder eines überdruckbetätigbaren ersten Aktors (12) und mit einem zweiten Anschluss (14) eines unterdruckbetätigbaren oder eines überdruckbetätigbaren zweiten Aktors (16) jeweils zum Ansaugen oder Ergreifen und Wiederfreigeben eines Gegenstands, insbesondere eines Werkstücks, wobei das Ventil (2) pumpenseitig wenigstens vier Anschlüsse (40) für die beiden Ansauganschlüsse (6) und die beiden Förderanschlüsse (8) der beiden Pumpen (4) aufweist und aktorseitig wenigstens zwei Anschlüsse (76) für den ersten und den zweiten Anschluss (10, 14) des betreffenden Aktors (12, 16) aufweist, wobei die wenigstens vier pumpenseitigen Anschlüsse (40) des Ventils jeweils mit jeweils einer kanalbildenden Öffnung (36) in einem ersten Körper (18) des Ventils (2) kommunizieren, wobei die wenigstens zwei aktorseitigen Anschlüsse (76) des Ventils jeweils mit jeweils einer kanalbildenden Öffnung (74) in einem zweiten Körper (20) des Ventils kommunizieren, und wobei zwischen dem ersten Körper (18) und dem zweiten Körper (20) des Ventils ein dritter Körper (22) mit Steueröffnungen (62) angeordnet ist, wobei wenigstens einer der drei Körper (18, 20, 22) gegenüber den zwei anderen Körpern rotatorisch verdrehbar ist, wobei die kanalbildenden Öffnungen (36, 74) in den Körpern (18, 20) derart ausgebildet und erstreckt sind, dass durch eine rotatorische Stellbewegung wenigstens eines der drei Körper (18, 20, 22) wenigstens vier Ventilstellungen realisierbar sind, derart, dass die Ansauganschlüsse (6) und die Förderanschlüsse (8) der zwei Pumpen (4) so mit den zwei aktorseitigen Anschlüssen (76) verbunden sind, dass in einer erste Ventilstellung beide aktorseitigen Anschlüsse (76) unterdruckbeaufschlagbar sind und in einer zweiten Ventilstellung beide aktorseitigen Anschlüsse (76) überdruckbeaufschlagbar sind und in einer dritten Ventilstellung der eine aktorseitige Anschluss (76) überdruckbeaufschlagbar und der andere (76) unterdruckbeaufschlagbar ist und in einer vierten Ventilstellung der eine aktorseitige Anschluss (76) unterdruckbeaufschlagbar und der andere (76) überdruckbeaufschlagbar ist.

## Beschreibung

Die vorliegende Erfindung betrifft ein Ventil zum strömungstechnischen Verbinden von zwei pneumatischen Pumpen, die jeweils einen Ansauganschluss und einen Förderanschluss aufweisen, mit einem ersten Anschluss eines unterdruckbetätigbaren oder eines überdruckbetätigbaren ersten Aktors und mit einem zweiten Anschluss eines unterdruckbetätigbaren oder eines überdruckbetätigbaren zweiten Aktors jeweils zum Ansaugen oder Ergreifen und Wiederfreigeben eines Gegenstands, insbesondere eines Werkstücks, bei einer Greifvorrichtung oder Handhabungseinrichtung. Des weiteren betrifft die Erfindung eine Greifvorrichtung mit zwei unterdruckbetätigbaren oder überdruckbetätigbaren Aktoren zum Ansaugen oder Ergreifen eines Gegenstands, insbesondere eines Werkstücks.

EP 0 688 174 B1 offenbart ein Fluidverteilungsventil mit unterschiedlichen Ventilstellungen zum strömungstechnischen Verbinden verschiedener Anschlüsse, wobei die unterschiedlichen Ventilstellungen über eine Rotation des Ventilkörpers ermöglicht werden.

Mit der vorliegenden Erfindung wurde im Zuge der Weiterentwicklung von unterdruckbetätigbare und/oder überdruckbetätigbare Aktoren aufweisenden Greifvorrichtungen oder Handhabungseinrichtungen ein Bedarf festgestellt, zwei pneumatische Pumpen vorzusehen, um bedarfsweise eine Saugleistung oder eine Förderleistung zur Ansteuerung und Betätigung der wenigstens zwei Aktoren bereitstellen zu können. Der vorliegenden Erfindung liegt mithin die Aufgabe zugrunde, die Verbindung dieser beiden Pumpen mit den Aktoren konstruktionstechnisch zu realisieren, wobei eine sehr weitgehende Flexibilität bei der Ansteuerung der beiden Aktoren möglich sein soll.

Diese Aufgabe wird erfindungsgemäß gelöst durch ein Ventil der eingangs genannten Art, wobei das Ventil pumpenseitig wenigstens vier Anschlüsse für die beiden Ansauganschlüsse und die beiden Förderanschlüsse der beiden Pumpen aufweist und aktorseitig wenigstens zwei Anschlüsse für den ersten und den zweiten Anschluss des betreffenden Aktors aufweist, wobei die wenigstens vier pumpenseitigen Anschlüsse des Ventils jeweils mit einer kanalbildenden Öffnung in einem ersten Körper des Ventils kommunizieren, wobei die wenigstens zwei aktorseitigen Anschlüsse des Ventils jeweils mit einer kanalbildenden Öffnung in einem zweiten Körper des Ventils kommunizieren, und wobei zwischen dem ersten Körper und dem zweiten Körper des Ventils ein dritter Körper mit Steueröffnungen angeordnet ist, wobei wenigstens einer der drei Körper gegenüber den zwei anderen Körpern rotatorisch verdrehbar ist, wobei die Öffnungen in den drei Körpern derart ausgebildet und erstreckt sind, dass durch eine rotatorische Stellbewegung wenigstens eines der drei Körper wenigstens vier Ventilstellungen realisierbar sind, derart, dass die Ansauganschlüsse und die Förderanschlüsse der zwei Pumpen so mit den zwei aktorseitigen Anschlüssen verbunden sind, dass in einer ersten Ventilstellung beide aktorseitigen Anschlüsse unterdruckbeaufschlagbar sind und in einer zweiten Ventilstellung beide aktorseitigen Anschlüsse überdruckbeaufschlagbar sind und in einer dritten Ventilstellung der eine aktorseitige Anschluss überdruckbeaufschlagbar und der andere unterdruckbeaufschlagbar ist und in einer vierten Ventilstellung der eine aktorseitige Anschluss unterdruckbeaufschlagbar und der andere überdruckbeaufschlagbar ist.

Das erfindungsgemäße Ventil weist also wenigstens sechs und insbesondere und vorzugsweise genau sechs Anschlüsse auf. Erfindungsgemäß bietet das Ventil die Möglichkeit, unter Verwendung der zwei Pumpen beide aktorseitigen Anschlüsse mit Unterdruck oder mit Überdruck zu beaufschlagen oder den einen Anschluss mit Unterdruck und den anderen Anschluss mit Überdruck oder andersherum zu beaufschlagen.

Das erfindungsgemäße Ventil bietet daher den Vorteil dass es bei verschieden konfigurierten Greifvorrichtungen oder Handhabungseinrichtungen mit unterschiedlichen Arten von Aktoren, also solchen die unterdruckbetätigbar sind und solchen die überdruckbetätigbar sind, eingesetzt werden kann, was größtmögliche Freiheit bei der schlussendlichen Konfiguration der Aktorseite derartiger Greifvorrichtungen bedeutet. Beispielsweise kann eine Greifvorrichtung mit zwei Sauggreifeinrichtungen als unterdruckbetätigbare Aktoren ausgebildet werden. Solchenfalls können die beiden Ansauganschlüsse der Pumpen zum Unterdruckanlegen an die Sauggreifvorrichtungen und die beiden Förderanschlüsse der Pumpen zum "Abblasen" beim Ablegen eines Werkstücks verwendet werden. Oder es kann eine Greifvorrichtung nach einer anderen Konfiguration der Aktorseite mit einer Saugreifeinrichtung als unterdruckbetätigbarem Aktor und mit einem sogenannten Fluid-Elastomer-Aktor (FEA) als überdruckbetätigbarem Aktor ausgebildet werden, bei dem ein Werkstück einerseits angesaugt und andererseits durch Betätigung des zweitgenannten Aktors über einen Greiferfinger oder dergleichen zugleich mechanisch gestützt wird. Durch die wenigstens vier Ventilstellungen oder Schaltstellungen ist es in diesem Fall beispielsweise ohne weiteres möglich, das Ventil derart anzusteuern, dass gleichzeitig an der Sauggreifeinrichtung ein Unterdruck angelegt ist und an dem Fluid-Elastomer-Aktor ein Überdruck angelegt ist, um ein betreffendes Werkstück "hybrid" zu greifen, also sowohl durch Unterdruck als auch mechanisch unterstützt. Um das Werkstück wieder abzulegen, kann durch eine gesteuerte Änderung der Ventil- oder Schaltstellung die Sauggreifeinrichtung belüftet und an den Fluid-Elastomer-Aktor ein Unterdruck angelegt werden. Außerdem wäre es denkbar, dass an der Aktorseite überhaupt keine Sauggreifeinrichtungen zum Einsatz kommen, sondern nur Fluid-Elastomer-Aktoren als überdruckbetätigbare Aktoren vorgesehen werden, die dann zu ihrer Betätigung mittels der Förderanschlüsse der Pumpen überdruckbeaufschlagt werden und mittels der Ansauganschlüsse unterdruckbeaufschlagt, also evakuiert werden, oder andersherum je nach Bauart des Fluid-Elastomer-Aktors.

In Weiterbildung des Erfindungsgedankens wird vorgeschlagen, dass die Öffnungen in den drei Körpern derart ausgebildet und erstreckt sind, dass durch eine rotatorische Stellbewegung wenigstens eines der drei Körper wenigstens 5, insbesondere wenigstens 6, insbesondere wenigstens 7, insbesondere wenigstens 8, insbesondere wenigstens 9, insbesondere wenigstens 10, insbesondere wenigstens 11, insbesondere wenigstens 12 Ventilstellungen realisierbar sind.

Insbesondere erweist es sich als vorteilhaft, wenn jeder der vier pumpenseitigen Anschlüsse des Ventils und damit jeder Ansauganschluss und jeder Förderanschluss jeder Pumpe wahlweise in strömungstechnische Verbindung mit jedem der zwei aktorseitigen Anschlüsse bringbar ist.

Nach einer Ausführungsform des erfindungsgemäßen Ventils wird vorgeschlagen, dass der erste Körper auf seiner dem dritten Körper zugewandten Seite einen eingreifenden Bereich mit einem rotationssymmetrischen, insbesondere zylindrischen Außenumfang aufweist, mit dem sich der erste Körper in den dritten Körper hineinerstreckt, und dass der dritte Körper hierfür einen topfförmigen und zu dem eingreifenden Bereich des ersten Körpers komplementären Bereich aufweist. Dies eröffnet die Möglichkeit, dass nicht nur eine Stirnseite, sondern zusätzlich oder alternativ der Außenumfang des ersten Körpers für die Druckkommunikation mit dem dritten Körper und/oder für die Druckkommunikation mit der umgebenden Atmosphäre konstruiert werden kann.

In Weiterbildung dieses Gedankens erweist es sich als vorteilhaft, dass in dem rotationssymmetrischen Außenumfang des ersten Körpers mit den Ansauganschlüssen und Förderanschlüssen der Pumpen kommunizierende Öffnungen ausmünden. Diese ausmündenden Öffnungen können dann wiederum mit Öffnungen in dem dritten Körper je nach Drehstellung der Körper zueinander kommunizieren.

Es erweist sich weiter als vorteilhaft, dass der topfförmige Bereich des dritten Körpers eine Wandung aufweist, die radiale Öffnungen aufweist, und dass durch Verdrehen des dritten Körpers relativ zu dem ersten Körper diese radialen Öffnungen wahlweise in Überdeckung mit den in dem rotationssymmetrischen Außenumfang des ersten Körpers ausmündenden Öffnungen bringbar sind oder wahlweise nicht in Überdeckung mit diesen Öffnungen bringbar sind, wodurch im ersten Fall jeweils eine Verbindung der betreffenden ausmündenden Bohrung mit der Atmosphäre herstellbar bzw. im zweiten Fall eine Sperrung der betreffenden ausmündenden Öffnung gegen die Atmosphäre herstellbar ist. Durch diese weitere Maßnahme werden Verbindungen der Öffnungen in dem ersten Körper mit der Atmosphäre bzw. Absperrungen gegen die Atmosphäre wahlweise realisierbar, so dass eine Kommunikation der Atmosphäre mit dem Ansauganschluss oder mit dem Förderanschluss einer betreffenden Pumpe wahlweise hergestellt oder unterbrochen werden kann.

Es kann sich auch als vorteilhaft erweisen, dass der erste Körper mit seiner dem dritten Körper zugewandten Seite, insbesondere mit einem eingreifenden Bereich, insbesondere mit einer ebenen Stirnseite, gegen den dritten Körper und relativ zu diesem verdrehbar anliegt, und dass orthogonal zu einer Drehachse eine Anlagefläche bei dem ersten Körper und eine Anlagefläche bei dem dritten Körper gebildet ist und dass in der Anlagefläche bei dem ersten Körper mit den Ansauganschlüssen und Förderanschlüssen der Pumpen kommunizierende Öffnungen ausmünden und dass in der Anlagefläche bei dem dritten Körper Steueröffnungen ausgebildet sind, die durch Verdrehen des ersten und des dritten Körpers relativ zueinander in überlappende Anordnung oder nicht überlappende Anordnung mit den ausmündenden Öffnungen bringbar sind.

Nach einer Ausführungsform erweist es sich als vorteilhaft, dass der dritte Körper als Ganzes topfförmig ausgebildet ist, und vorzugsweise lediglich eine Umfangswand und einen ebenen Topfboden aufweist, wobei vorzugsweise sowohl in der Umfangswand als auch in dem Topfboden Steueröffnungen ausgebildet sind.

Nach einer weiteren Ausführungsform erweist es sich als vorteilhaft, dass der dritte Körper mit seiner dem zweiten Körper zugewandten Seite gegen den zweiten Körper verdrehbar anliegt und dass vorzugsweise orthogonal zu einer Drehachse eine Anlagefläche bei dem zweiten Körper und eine Anlagefläche bei dem dritten Körper gebildet ist und dass in der Anlagefläche bei dem zweiten Körper mit den aktorseitigen Anschlüssen kommunizierende Öffnungen ausmünden.

Weiter erweist es sich als vorteilhaft, wenn die in der Anlagefläche bei dem zweiten Körper ausmündenden Öffnungen kongruent oder zumindest überlappend mit den in der Anlagefläche bei dem ersten Körper ausmündenden Öffnungen angeordnet sind. Dies bringt den Vorteil mit sich, dass der dritte Körper nur eine dünne Wand mit Durchgangsöffnungen aufweisen muss, wobei diese Durchgangsöffnungen dann als Steueröffnungen fungieren können.

Es erweist sich auch als vorteilhaft, dass zur Ausführung einer Stellbewegung des Ventils eine motorische Antriebseinrichtung zum Verdrehen des wenigstens einen Körpers gegen die zwei anderen Körper vorhanden ist. Dies kann in vorteilhafter Weise dadurch realisiert sein, dass der dritte Körper gegenüber dem ersten und dem zweiten Körper rotatorisch verdrehbar angeordnet ist und dass hierfür eine mit dem dritten Körper drehfeste Welle vorgesehen ist, welche gegenüber dem ersten und dem zweiten Körper drehbar gelagert ist. Diese Welle ist dann vorzugsweise motorisch antreibbar, um das Ventil bzw. eine das Ventil umfassende Greifvorrichtung anzusteuern und zu betreiben.

Als weiter vorteilhaft kann es sich erweisen, wenn bei dem erfindungsgemäßen Ventil Schaltstellungen vorgesehen sind, bei denen der jeweilige Ansauganschluss oder Förderanschluss beider Pumpen an denselben Anschluss eines Aktors gelegt ist. Auf diese Weise lässt sich bei einem Aktor die Saugleistung oder Förderleistung beider Pumpen miteinander kombinieren und hierdurch vergrößern.

Gegenstand der Erfindung ist auch eine Greifvorrichtung mit den Merkmalen des Anspruchs 13. Wenn vorausgehend und im folgenden von zwei Aktoren die Rede ist, sei darauf hingewiesen, dass es durchaus möglich ist, das erfindungsgemäße Ventil auch mit mehr als zwei Aktoren zu verbinden. Hierfür könnten die aktorseitigen Anschlüsse des Ventils verzweigen, oder es wäre denkbar, dass bei Verwendung von mehr als zwei Aktoren vorgesehen ist, dass die Anschlüsse mehrerer Aktoren durch ein weiteres schaltbares Mittel miteinander verbindbar oder voneinander trennbar sind.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
Figuren 1a-c eine Seitenansicht und zwei perspektivische Ansichten einer Ausführungsform eines erfindungsgemäßen Ventils mit zwei mit dem Ventil zusammenwirkenden pneumatischen Pumpen und mit zwei schematisch angedeuteten Aktoren, welche zusammen eine erfindungsgemäße Greifvorrichtung bilden;
Figuren 2a-d verschiedene Ansichten eines ersten Körpers des Ventils;
Figuren 3a-j verschiedene Ansichten eines zweiten Körpers des Ventils;
Figuren 4a-c verschiedene Ansichten eines dritten Körpers des Ventils;
Figur 5 eine schematische Darstellung von zwölf Schaltstellungen des Ventils bzw. der Greifvorrichtung.

Die Figuren la bis c zeigen in schematischer und explosionsartiger Darstellung ein erfindungsgemäßes Ventil 2 zum strömungstechnischen Verbinden von zwei pneumatischen Pumpen 4, die jeweils einen Ansauganschluss 6 und einen Förderanschluss 8 aufweisen, mit einem ersten Anschluss 10 eines ersten Aktors 12 und mit einem zweiten Anschluss 14 eines zweiten Aktors 16. Jeder der beiden Aktoren 12, 16 kann unterdruckbetätigbar oder überdruckbetätigbar ausgebildet sein, es kann sich hierbei also beispielsweise um eine Sauggreifeinrichtung oder um einen Fluid-Elastomer-Aktor, welcher eine Stellbewegung auszuführen vermag, handeln. Die vorstehend beschriebenen Komponenten bilden insbesondere eine erfindungsgemäße Greifvorrichtung.

Das erfindungsgemäße Ventil 2 ist so ausgebildet und dient dem Zweck, dass wenigstens vier Ventilstellungen realisierbar sind, nämlich derart, dass die Ansauganschlüsse 6 und die Förderanschlüsse 8 der zwei Pumpen 4 so mit den zwei aktorseitigen Anschlüssen 10, 14 verbunden sind, dass in einer ersten Ventilstellung beide aktorseitigen Anschlüsse 10, 14 unterdruckbeaufschlagbar sind und in einer zweiten Ventilstellung beide aktorseitigen Anschlüsse 10, 14 überdruckbeaufschlagbar und oder in einer dritten Ventilstellung der eine aktorseitige Anschluss 10 überdruckbeaufschlagbar und der andere 14 unterdruckbeaufschlagbar und in einer vierten Ventilstellung der eine aktorseitige Anschluss 10 unterdruckbeaufschlagbar und der andere 14 überdruckbeaufschlagbar ist.

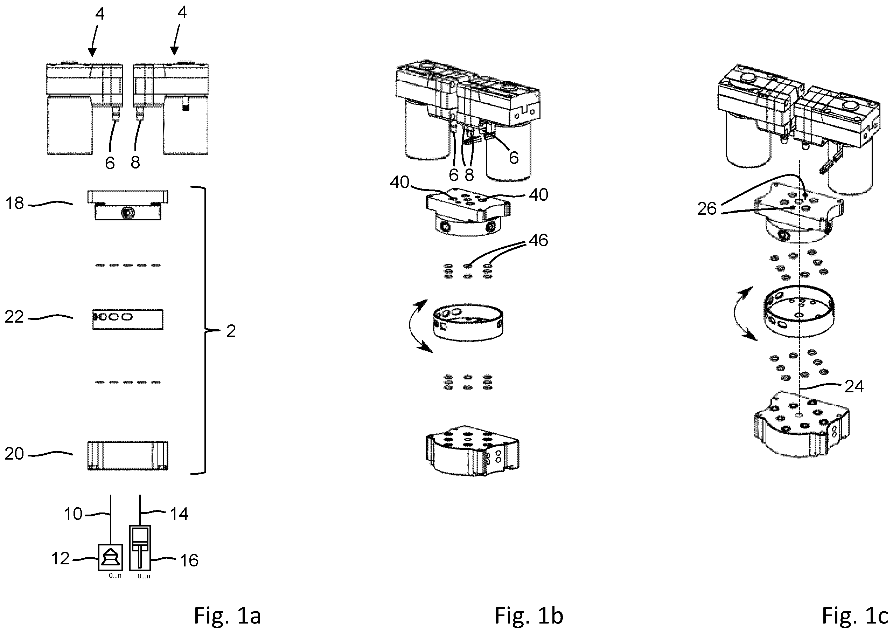

Das Ventil 2 ist im wesentlichen gebildet aus einem ersten Körper 18, einem zweiten Körper 20 und einem zwischen dem ersten und dem zweiten Körper 18, 20 angeordneten dritten Körper 22. Im beispielhaft dargestellten Fall ist der dritte Körper 22 relativ zu dem ersten und dem zweiten Körper 18,20 rotatorisch verdrehbar, wobei hierdurch die verschiedenen Schaltstellungen des Ventils 2 eingestellt werden bzw. von einer in eine andere Schaltstellung gewechselt wird. Dies wird im beispielhaft dargestellten Fall durch eine elektromotorische Einrichtung realisiert, von der schematisch in Figur 1c nur eine Motorwelle 24 als Stellglied angedeutet ist, welche mit dem dritten Körper 22 drehfest verbunden ist. Im beispielhaft dargestellten Fall befindet sich die elektromotorische Einrichtung mit ihrem Motorteil oberhalb des ersten Körpers 18 und ist an dem ersten Körper 18 an Gewindeöffnungen 26 montierbar.

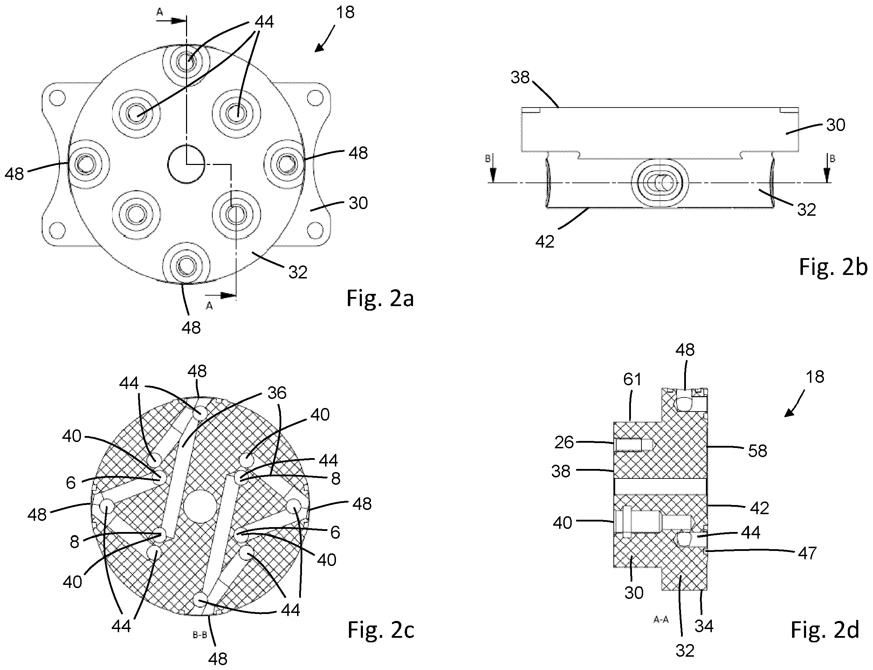

Der erste Körper 18, der in verschiedenen Ansichten in Figur 2 dargestellt ist, ist beispielhaft einstückig ausgebildet und umfasst einen ungefähr plattenförmigen Trägerteil 30 und einen daran angrenzenden kreisscheibenförmigen eingreifenden Bereich 32 mit einem zylindrischen Außenumfang 34. Der erste Körper 18 erstreckt sich mit diesem eingreifenden Bereich 32 in den dritten Körper 22 hinein, der hierfür topfförmig ausgebildet ist. Man erkennt in den Figuren 2a bis d eine Vielzahl von kanalbildenden Öffnungen 36 im Inneren des ersten Körpers 18, die größtenteils in Form von Öffnungen ausgebildet sind. Diese Öffnungen 36 münden auf einer den Pumpen 4 zugewandten Seite 38 des Trägerteils 30 in vier Öffnungen 40 (siehe Figur lb). Der jeweilige Ansauganschluss 6 und Förderanschluss 8 einer jeweiligen Pumpe 4 ist in je eine Öffnung 40 an der Seite 38 des Trägerteils 30 einsteckbar. Die Öffnungen 36 münden andererseits auf einer den Pumpen 4 abgewandten und dem dritten Körper 22 zugewandten Seite 42 in acht Öffnungen 44, bei denen jeweils ein O-Ring 46 in einem Dichtsitz 47 (Figur 1a) anordenbar ist. In Figur 2c sind sowohl die auf der den Pumpen 4 zugewandten Seite 38 mündenden vier Öffnungen 40 als auch die auf der den Pumpen 4 abgewandten und dem dritten Körper 22 zugewandten Seite 42 mündenden acht Öffnungen 44 dargestellt, und zwar als runde Kreise, welche orthogonal zur Zeichnungsebene zu der Seite 38 bzw. zu der Seite 42 sich erstrecken und dort ausmünden.

Des Weiteren erkennt man aus Figur 2c, dass die kanalbildenden Öffnungen 36 innerhalb des ersten Körpers 18 zu zweien zusammengeführt sind und radial an dem eingreifenden Bereich 32 in einer Öffnung 48 ausmünden. Es sind vier solcher radialer ausmündender Öffnungen 48 vorgesehen (siehe Figur 2c).

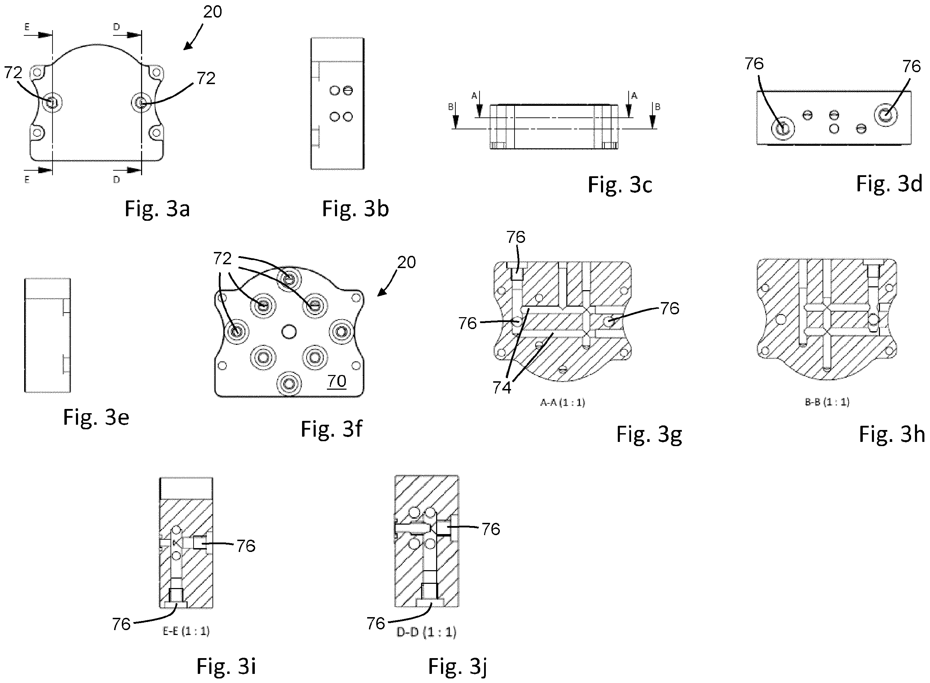

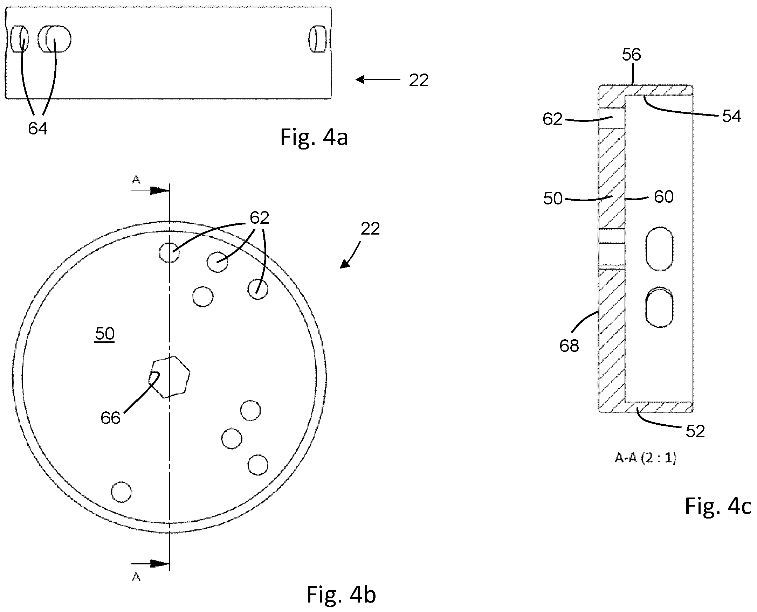

Als nächstes seien die Figuren 4a-c betrachtet, welche den dritten Körper 22, also den mittleren der drei Körper 18, 20, 22 des Ventils 2 im einzelnen darstellen. Dieser dritte Körper 22 ist besonders einfach topfförmig ausgebildet. Er umfasst einen zu beiden Seiten hin ebenen Topfboden 50 und eine zylindrische Wandung 52 mit einem zylindrischen Innenumfang 54 und beispielhaft auch mit einem zylindrischen Außenumfang 56. Der erste Körper 18 greift mit seinem eingreifenden Bereich 32 in den topfförmigen dritten Körper 22 ein. Dabei bildet die pumpenabgewandte Seite 42 des ersten Körpers 18 eine Anlagefläche 58 des ersten Körpers 18 gegen den Topfboden 50 des dritten Körpers 22, der seinerseits eine Anlagefläche 60 bildet. Des weiteren bildet der zylindrische Außenumfang 34 bei dem ersten Körper 18 eine zylindrische Anlagefläche 61 oder Dichtfläche gegen den komplementären zylindrischen Innenumfang 54 des dritten Körpers 22. Des weiteren zeigen die Figuren 4a-c beispielhaft und bevorzugt acht Steueröffnungen 62 die in dem Topfboden 50 als Durchgangsöffnungen ausgebildet sind, und des weiteren acht Saug- bzw. Belüftungsöffnungen 64 in der zylindrischen Wandung 52, die ebenfalls als Durchgangsöffnungen ausgebildet sind und in gewissen Schaltstellungen des Ventils dazu dienen, den Ansauganschluss 6 oder den Förderanschluss 8 einer jeweiligen Pumpe 4 mit der Atmosphäre zu verbinden. In der Mitte des Topfbodens 50 des dritten Körpers 22 ist eine Öffnung 66 für die Durchführung und Verdrehsicherung mit der schon erwähnten Motorwelle 24. Die von dem ersten Körper 18 abgewandte Seite des Topfbodens 50 bildet eine Anlagefläche 68 des verdrehbaren dritten Körpers 22 gegen den zweiten Körper 20, der schließlich in den Figuren 3a-j im Einzelnen dargestellt ist und der eine Schnittstelle bzw. einen Anschluss zu den Aktoren 12 und 16 bildet.

Der zweite Körper 20 bildet eine ebene Anlagefläche 70, welche gegen die Anlagefläche 68 des dritten Körpers 22 anlegbar und verdrehbar ist. In dieser Anlagefläche 70 sind acht ausmündenden Öffnungen 72 derselben relativen Anordnung zueinander wie die acht Öffnungen 44 bei der Seite 42 des ersten Körpers 18. Diese Öffnungen 72 kommunizieren mit kanalbildenden Öffnungen 74 im Inneren des zweiten Körpers 20, welche sowohl axial als auch seitlich in jeweils zwei Anschlüssen 76 aktorseitig ausmünden, an welche der erste und der zweite Anschluss 10, 14 des ersten bzw. zweiten Aktors 12, 16 anschließbar ist. Die beiden Schnittdarstellungen A-A und B-B verdeutlichen zwei voneinander separierte Abnehmerkreise für den Anschluss von Aktoren.

Das Ventil 2 wird dadurch betätigt und geschaltet, dass mittels der elektromotorischen Einrichtung und deren Motorwelle 24 der topfförmige dritte Körper 22 gegenüber dem ersten Körper 18 und dem zweiten Körper 20 verdreht wird. Während einer solchen Drehbetätigung werden die beiden Pumpen 4 vorzugsweise stillgesetzt, wobei diese in beiden Richtungen druckdicht abschließend ausgebildet sind. Auf diese Weise kann eine beliebige der zwölf Schaltstellungen, die nachfolgend beschrieben werden, bei dem erfindungsgemäßen Ventil 2 eingestellt werden, so dass beispielsweise von einem Betrieb des Ergreifens eines Gegenstands in einen Betrieb des Absetzens des Gegenstands umgeschaltet werden kann.

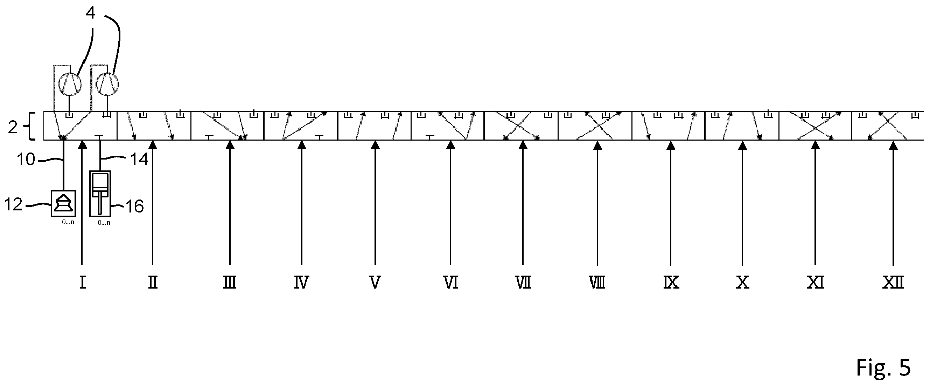

In Figur 5 sind nebeneinander zwölf Schaltstellungen des Ventils 2 dargestellt, wobei in der linken Darstellung oberhalb des angedeuteten Ventils 2 zwei Pumpen 4 und unterhalb davon zwei Aktoren 12, 16 angedeutet sind.

In der ersten Schaltstellung I ist der dritte Körper 22 mit seinen Steueröffnungen 62 und seinen radialen Saug- bzw. Belüftungsöffnungen 64 derart gegenüber dem ersten und zweiten Körper 18, 20 rotatorisch positioniert, dass hierdurch der Ansauganschluss 6 der links dargestellten Pumpe 4 mit der Atmosphäre kommuniziert und der Förderbandanschluss den ersten Anschluss 10 des Aktors 12 überdruckbeaufschlagt. In derselben Weise ist die rechts dargestellten Pumpe 4 geschaltet. Hierdurch addiert sich die Förderleistung der beiden Pumpen bei dem ersten Anschluss 10 des ersten Aktors 12. Der zweite Anschluss 14 des zweiten Aktors 16 ist indessen nicht angesteuert.

In der zweiten Schaltstellung II des Ventils 2 sind beide Anschlüsse 10, 14 der beiden Aktoren 10, 16 überdruckbeaufschlagt.

In der dritten Schaltstellung III des Ventils 2 ist der zweite Anschluss 14 des zweiten Aktors 16 überdruckbeaufschlagt, und zwar durch beide Pumpen 4. Der erste Anschluss 10 des ersten Aktors 12 ist nicht angesteuert.

In der vierten Schaltstellung IV des Ventils 2 ist der erste Anschluss 10 des ersten Aktors 12 unterdruckbeaufschlagt, und zwar durch beide Pumpen 4. Der zweite Anschluss 14 des zweiten Aktors 16 ist nicht angesteuert.

In der fünften Schaltstellung V des Ventils 2 ist der erste Anschluss 10 des ersten Aktors 12 und der zweite Anschluss 14 des zweiten Aktors 16 jeweils unterdruckbeaufschlagt.

In der sechsten Schaltstellung VI des Ventils 2 ist der zweite Anschluss 14 des zweiten Aktors 16 unterdruckbeaufschlagt, und zwar durch beide Pumpen 4. Der erste Anschluss 10 des ersten Aktors 12 ist nicht angesteuert.

In der siebten Schaltstellung VII des Ventils 2 ist der erste Anschluss 10 des ersten Aktors 12 und der zweite Anschluss 14 des zweiten Aktors 16 überdruckbeaufschlagt. Diese Schaltstellung entspricht der zweiten Schaltstellung II, wobei die jeweiligen Anschlüsse durch unterschiedliche Pumpen beaufschlagt sind.

In der achten Schaltstellung VIII sind beide Anschlüsse 10, 14 beider Aktoren 12, 16 unterdruckbeaufschlagt. Diese Schaltstellung entspricht der fünften Schaltstellung V, wobei die jeweiligen Anschlüsse durch unterschiedliche Pumpen beaufschlagt sind.

In der neunten Schaltstellung IX ist der erste Aktor 12 überdruckbeaufschlagt und der zweite Aktor 16 ist unterdruckbeaufschlagt.

In der zehnten Schaltstellung X ist der erste Anschluss 10 des ersten Aktors 12 unterdruckbeaufschlagt, und der zweite Anschluss 14 des zweiten Aktors 16 ist überdruckbeaufschlagt.

In der elften Schaltstellung XI ist der erste Aktor 12 unterdruckbeaufschlagt, und der zweite Aktor 16 ist überdruckbeaufschlagt. Diese Schaltstellung entspricht der zehnten Schaltstellung X, wobei die jeweiligen Anschlüsse durch unterschiedliche Pumpen beaufschlagt sind.

In der zwölften Schaltstellung XII ist der erste Aktor 12 überdruckbeaufschlagt, und der zweite Aktor ist unterdruckbeaufschlagt. Diese Schaltstellung entspricht der neunten Schaltstellung IX, wobei die jeweiligen Anschlüsse durch unterschiedliche Pumpen beaufschlagt sind.

Es sei noch erwähnt, dass die Darstellung der beiden Aktoren 12, 16 rein beispielhaft ist. Es könnten auch zwei unterdruckbetätigbare oder zwei überdruckbetätigbare Aktoren vorgesehen und mittels des erfindungsgemäßen Ventils 2 angesteuert und betätigt werden.

Sofern in einer jeweiligen Schaltstellung nicht stets beide Pumpen 4 gleichzeitig betrieben werden, sondern nur eine, so lassen sich gegenüber den vorstehend diskutierten zwölf Schaltstellungen weitere Schaltstellungen realisieren.

Wie vorstehend ausgeführt entsprechen sich einige der Schaltstellungen; dies gilt jedenfalls dann, solange beide Pumpen gleichzeitig betrieben werden und solange die Leistung beider Pumpen gleich ist. Wenn dies nicht der Fall ist, insbesondere wenn bewusst Pumpen unterschiedlicher Leistung vorgesehen und betrieben werden, können unterschiedliche Verhältnisse bei den Aktoren eingestellt werden. Dies kann sich im Einzelfall als besonders vorteilhaft erweisen, und es kann angezeigt sein, bei der einen Anwendung die eine Schaltstellung und bei der anderen Anwendung eine andere Schaltstellung zu benutzen, obschon die Aktoren in beiden Fällen unterdruckbeaufschlagt bzw. überdruckbeaufschlagt betätigt werden.

In jedem Fall erweist es sich als vorteilhaft, wenn wenigstens die vorausgehend erörterte zweite (oder alternativ siebte), die fünfte (oder alternativ achte), die neunte (oder alternativ zwölfte) und die zehnte (oder alternativ elfte) Schaltstellung ansteuerbar vorgesehen werden.

## Patentansprüche

1. Ventil (2) zum strömungstechnischen Verbinden von zwei pneumatischen Pumpen (4), die jeweils einen Ansauganschluss (6) und einen Förderanschluss (8) aufweisen, mit einem ersten Anschluss (10) eines unterdruckbetätigbaren oder eines überdruckbetätigbaren ersten Aktors (12) und mit einem zweiten Anschluss (14) eines unterdruckbetätigbaren oder eines überdruckbetätigbaren zweiten Aktors (16) jeweils zum Ansaugen oder Ergreifen und Wiederfreigeben eines Gegenstands, insbesondere eines Werkstücks, wobei das Ventil (2) pumpenseitig wenigstens vier Anschlüsse (40) für die beiden Ansauganschlüsse (6) und die beiden Förderanschlüsse (8) der beiden Pumpen (4) aufweist und aktorseitig wenigstens zwei Anschlüsse (76) für den ersten und den zweiten Anschluss (10, 14) des betreffenden Aktors (12, 16) aufweist, wobei die wenigstens vier pumpenseitigen Anschlüsse (40) des Ventils jeweils mit einer kanalbildenden Öffnung (36) in einem ersten Körper (18) des Ventils (2) kommunizieren, wobei die wenigstens zwei aktorseitigen Anschlüsse (76) des Ventils jeweils mit einer kanalbildenden Öffnung (74) in einem zweiten Körper (20) des Ventils kommunizieren, und wobei zwischen dem ersten Körper (18) und dem zweiten Körper (20) des Ventils ein dritter Körper (22) mit Steueröffnungen (62) angeordnet ist, wobei wenigstens einer der drei Körper (18, 20, 22) gegenüber den zwei anderen Körpern rotatorisch verdrehbar ist, wobei die kanalbildenden Öffnungen (36, 74) in den Körpern (18, 20) derart ausgebildet und erstreckt sind, dass durch eine rotatorische Stellbewegung wenigstens eines der drei Körper (18, 20, 22) wenigstens vier Ventilstellungen realisierbar sind, derart, dass die Ansauganschlüsse (6) und die Förderanschlüsse (8) der zwei Pumpen (4) so mit den zwei aktorseitigen Anschlüssen (76) verbunden sind, dass in einer erste Ventilstellung beide aktorseitigen Anschlüsse (76) unterdruckbeaufschlagbar sind und in einer zweiten Ventilstellung beide aktorseitigen Anschlüsse (76) überdruckbeaufschlagbar sind und in einer dritten Ventilstellung der eine aktorseitige Anschluss (76) überdruckbeaufschlagbar und der andere (76) unterdruckbeaufschlagbar ist und in einer vierten Ventilstellung der eine aktorseitige Anschluss (76) unterdruckbeaufschlagbar und der andere (76) überdruckbeaufschlagbar ist.

2. Ventil nach Anspruch 1, **dadurch gekennzeichnet, dass** die Öffnungen (36, 62, 74) in den drei Körpern (18, 20, 22) derart ausgebildet und erstreckt sind, dass durch eine rotatorische Stellbewegung wenigstens eines der drei Körper wenigstens 5, insbesondere wenigstens 6, insbesondere wenigstens 7, insbesondere wenigstens 8, insbesondere wenigstens 9, insbesondere wenigstens 10, insbesondere wenigstens 11, insbesondere wenigstens 12 Ventilstellungen realisierbar sind.

3. Ventil nach Anspruch 1 oder 2, **dadurch gekennzeichnet, dass** jeder der vier pumpenseitigen Anschlüsse (40) des Ventils und damit jeder Ansauganschluss (6) und jeder Förderanschluss (8) jeder Pumpe (4) wahlweise in strömungstechnische Verbindung mit jedem der zwei aktorseitigen Anschlüsse (76) bringbar ist.

4. Ventil nach Anspruch 1, 2 oder 3, **dadurch gekennzeichnet, dass** der erste Körper (18) auf seiner dem dritten Körper (22) zugewandten Seite einen eingreifenden Bereich (32) mit einem rotationssymmetrischen, insbesondere zylindrischen Außenumfang (34) aufweist, mit dem sich der erste Körper (18) in den dritten Körper (22) hineinerstreckt, und dass der dritte Körper (22) hierfür einen topfförmigen und zu dem eingreifenden Bereich (32) des ersten Körpers (18) komplementären Bereich aufweist.

5. Ventil nach Anspruch 4, **dadurch gekennzeichnet, dass** in dem rotationssymmetrischen Außenumfang (34) des ersten Körpers (18) mit den Ansauganschlüssen (6) und Förderanschlüssen (8) der Pumpen (4) kommunizierende Öffnungen ausmünden.

6. Ventil nach Anspruch 4 oder 5, **dadurch gekennzeichnet, dass** der topfförmige Bereich des dritten Körpers (22) eine Wandung (52) aufweist, die radiale Öffnungen (64) aufweist, und dass durch Verdrehen des dritten Körpers (22) relativ zu dem ersten Körper (18) diese radialen Öffnungen (64) wahlweise in Überdeckung mit den in dem rotationssymmetrischen Außenumfang (34) des ersten Körpers (18) ausmündenden Öffnungen (48) bringbar sind oder wahlweise nicht in Überdeckung mit diesen Öffnungen (48) bringbar sind, wodurch im ersten Fall jeweils eine Verbindung der betreffenden ausmündenden Öffnung (48) mit der Atmosphäre herstellbar bzw. im zweiten Fall eine Sperrung der betreffenden ausmündenden Öffnung (48) gegen die Atmosphäre herstellbar ist.

7. Ventil nach einem der vorstehenden Ansprüche, **dadurch gekennzeichnet, dass** der erste Körper (18) mit seiner dem dritten Körper (22) zugewandten Seite (42), insbesondere mit einem eingreifenden Bereich (32), insbesondere mit einer ebenen Stirnseite, gegen den dritten Körper (22) und relativ zu diesem verdrehbar anliegt, und dass orthogonal zu einer Drehachse eine Anlagefläche (58) bei dem ersten Körper (18) und eine Anlagefläche (60) bei dem dritten Körper (22) gebildet ist und dass in der Anlagefläche (58) bei dem ersten Körper (18) mit den Ansauganschlüssen (6) und Förderanschlüssen (8) der Pumpen (4) kommunizierende Öffnungen (44) ausmünden und dass in der Anlagefläche (60) bei dem dritten Körper (18) Steueröffnungen (62) ausgebildet sind, die durch Verdrehen des ersten und des dritten Körpers (18, 22) relativ zueinander in überlappende Anordnung oder nicht überlappende Anordnung mit den ausmündenden Öffnungen (44) bringbar sind.

8. Ventil nach einem der vorstehenden Ansprüche, **dadurch gekennzeichnet, dass** der dritte Körper (22) mit seiner dem zweiten Körper (20) zugewandten Seite gegen den zweiten Körper (20) verdrehbar anliegt und dass vorzugsweise orthogonal zu einer Drehachse eine Anlagefläche (70) bei dem zweiten Körper (20) und eine Anlagefläche (68) bei dem dritten Körper (22) gebildet ist und dass in der Anlagefläche (70) bei dem zweiten Körper (20) mit den aktorseitigen Anschlüssen kommunizierende Öffnungen (72) ausmünden.

9. Ventil nach Anspruch 8, **dadurch gekennzeichnet, dass** die in der Anlagefläche (70) bei dem zweiten Körper (20) ausmündenden Öffnungen (72) kongruent oder zumindest überlappend mit den in der Anlagefläche (58) bei dem ersten Körper (18) ausmündenden Öffnungen (44) angeordnet sind.

10. Ventil nach einem der vorstehenden Ansprüche, **dadurch gekennzeichnet, dass** zur Ausführung einer Stellbewegung des Ventils (2) eine motorische Antriebseinrichtung zum Verdrehen des dritten Körpers (22) gegen die zwei anderen Körper (18, 20) vorhanden ist.

11. Ventil nach einem der vorstehenden Ansprüche, **dadurch gekennzeichnet, dass** der dritte Körper (22) gegenüber dem ersten und dem zweiten Körper (18, 20) rotatorisch verdrehbar angeordnet ist und dass hierfür eine mit dem dritten Körper (22) drehfeste Welle (24) vorgesehen ist, welche gegenüber dem ersten und dem zweiten Körper (18, 20) drehbar gelagert ist.

12. Ventil nach einem der vorstehenden Ansprüche, **dadurch gekennzeichnet, dass** Schaltstellungen vorgesehen sind, bei denen der jeweilige Ansauganschluss (6) oder Förderanschluss (8) beider Pumpen (4) an denselben Anschluss (10, 14) eines Aktors (12, 16) gelegt ist.

13. Greifvorrichtung mit zwei pneumatischen Pumpen (4), die jeweils einen Ansauganschluss (6) und einen Förderanschluss (8) aufweisen, und mit zwei unterdruckbetätigbaren oder überdruckbetätigbaren Aktoren (12, 16) zum Ansaugen oder Ergreifen und Wiederfreigeben eines Gegenstands, insbesondere eines Werkstücks, die entweder beide unterdruckbetätigbar oder beide überdruckbetätigbar sind oder von denen der eine unterdruckbetätigbar und der andere überdruckbetätigbar ist, **gekennzeichnet durch** ein Ventil (2) nach einem der vorstehenden Ansprüche, welches zum strömungstechnischen Verbinden der zwei pneumatischen Pumpen (4), mit einem ersten Anschluss (10) und mit einem zweiten Anschluss (14) zweier Aktoren (12, 16) angeordnet ist.

14. Greifvorrichtung nach Anspruch 13 **dadurch gekennzeichnet, dass** mehr als zwei Aktoren (12, 16) vorgesehen sind und dass die Anschlüsse (10, 14) mehrerer Aktoren durch ein weiteres schaltbares Mittel miteinander verbindbar oder voneinander trennbar sind.
